Europäisches Patentamt

European Patent Office

Office européen des brevets

(11) Veröffentlichungsnummer: **0 324 955**
**A1**

## (12) EUROPÄISCHE PATENTANMELDUNG

(21) Anmeldenummer: **88121184.1**

(22) Anmeldetag: **17.12.88**

(51) Int. Cl.4: **H01M 4/66 , H01M 10/39**

(30) Priorität: **24.12.87 DE 3744170**

(43) Veröffentlichungstag der Anmeldung:
**26.07.89 Patentblatt 89/30**

(84) Benannte Vertragsstaaten:
**DE FR GB**

(71) Anmelder: **Asea Brown Boveri**
**Aktiengesellschaft**
**Kallstadter Strasse 1**
**D-6800 Mannheim 31(DE)**

(72) Erfinder: **Knödler, Reinhard, Dr.rer.nat.**
**Lattweg 17**
**D-6902 Sandhausen(DE)**

(74) Vertreter: **Rupprecht, Klaus, Dipl.-Ing. et al**
**c/o Asea Brown Boveri Aktiengesellschaft**
**Zentralbereich Patente Postfach 100351**
**D-6800 Mannheim 1(DE)**

(54) **Elektrochemische Speicherzelle.**

(57) Die Erfindung bezieht sich auf eine elektrochemische Speicherzelle (1), die von einem Gehäuse (2) aus Leichtmetall, insbesondere Aluminium nach außenhin begrenzt ist. Aufgabe der Erfindung ist es, einen Korrosionsschutz (10) aufzuzeigen, der über die gesamte Lebensdauer der Speicherzelle (1) auf den Innenflächen des Gehäuses (2) haftet. Erfindungsgemäß werden auf die Innenflächen des Gehäuses (2) drei Schichten (11,12,13) übereinander aufgetragen, die alle gegenüber den Reaktionsprodukten der Speicherzelle (1) beständig sind und zudem definierte Ausdehnungskoeffizienten aufweisen.

Fig.1

## Elektrochemische Speicherzelle

Die Erfindung bezieht sich auf eine elektrochemische Speicherzelle gemäß dem Oberbegriff des Patentanspruches 1.

Solche elektrochemischen Speicherzellen eignen sich sehr gut als Energiequellen. Sie finden in vermehrtem Maße ihre Anwendung beim Aufbau von Hochtemperaturspeicherbatterien, die zur Stromversorgung von Elektrofahrzeugen vorgesehen sind. Ein spezielles Beispiel für diese Speicherzellen sind solche auf der Basis von Natrium und Schwefel, die wiederaufladbar sind und einen Festelektrolyten aus Betaaluminiumoxid besitzen, der den Anodenraum vom Kathodenraum trennt. Als Vorteil dieser Speicherzellen ist hervorzuheben, daß beim Aufladen derselben keine elektrochemischen Nebenreaktionen ablaufen, und die Stromausbeute daher etwa bei 100 % liegt. Bei solchen Speicherzellen ist der Anodenraum mit Natrium gefüllt und innerhalb des Festelektrolyten angeordnet. Der Kathodenraum liegt zwischen dem Festelektrolyten und dem metallischen Gehäuse, welches die Speicherzelle nach außenhin begrenzt. Für die Herstellung des Gehäuses wird ein Leichtmetall. vorzugsweise Aluminium verwendet. Die in der Speicherzelle enthaltenen Reaktanten bzw. die sich bei der Entladung der Speicherzelle bildenden Reaktionsprodukte sind sehr korrosiv. Es ist deshalb nicht auszuschließen, daß die mit dem Polysulfid in Kontakt kommenden metallischen Bauelemente des Gehäuses mit der Zeit zerstört werden. Zur Behebung dieser Nachteile wurde bereits in der Zeitschrift "Thin Solid Films 83", 1981, Seite 417 angeregt, die Innenflächen des metallischen Gehäuses dieser Speicherzellen mit einem Korrosionsschutz zu überziehen. Als mögliche Schutzschicht wurde eine Legierung aus Chrom, Nickel, Kobalt und Molybdän vorgeschlagen.

Aus der DE-OS 24 57 418 ist eine elektrochemische Speicherzelle bekannt, die durch ein metallisches Gehäuse nach außenhin begrenzt ist. Auf die Innenflächen dieses Gehäuses ist ein Korrosionsschutz aus Graphit aufgetragen.

In der US-PS 2 749 603 ist ein metallisches Gehäuse aus Leichtmetall für die Begrenzung einer elektrochemischen Speicherzelle beschrieben. Auf die Innenfläche des Gehäuses ist ein Überzug aus Molybdänsulfid aufgetragen, der das Gehäuse vor Korrosion schützen soll.

Aus der DE-OS 3 117 381 ist ein Verfahren zur Herstellung einer elektrochemischen Speicherzelle beschrieben, bei dem die Innenflächen des metallischen Gehäuses mit einem Überzug aus Titan, Mangan. Eisen, Kobalt oder Nickel überzogen werden.

Die vorgenannten Möglichkeiten zum Schutz der Gehäuse vor Korrosion sind zwar in der Lage den Korrosionswiderstand eines solchen Gehäuses kurzfristig zu verbessern, jedoch ist hiermit der Nachteil verbunden, daß der elektrische Innenwiderstand dieser Speicherzellen mit zunehmendem Alter durch Bildung von sulfidhaltigen Schichten auf den Innenflächen sehr ansteigt. Es ist ebenfalls nicht auszuschließen, daß sich sonstige nichtleitenden Schichten auf diesen bekannten Schutzüberzügen bilden. Ein weiterer Nachteil ist darin zu sehen, daß es zwischen dem Gehäuse und dem aufgetragenen Korrosionsschutz zu beachtlichen mechanischen Spannungen kommt, so daß sich in der Schutzschicht Risse bilden, und es teilweise zum Abplatzen der Schichten kommt, wodurch der Korrosionsschutz für das Gehäuse mit fortschreitendem Alter der Speicherzelle abnimmt.

Der Erfindung liegt deshalb die Aufgabe zugrunde, eine elektrochemische Speicherzelle mit einem Gehäuse aus Leichtmetall zu schaffen, das einen Korrosionsschutz aufweist, der das Gehäuse über die gesamte Lebensdauer der Speicherzelle immer gleich gut schützt.

Diese Aufgabe wird erfindungsgemäß durch die Merkmale des Patentanspruches 1 gelöst.

Die erfindungsgemäße Speicherzelle verfügt über einen Korrosionsschutz, der die unterschiedlichen Ausdehnungskoeffizienten des Gehäuses und der aufgetragenen Schutzschichten in optimaler Weise ausgleicht. Ferner gewährleistet er eine optimale Haftung aller aufgetragenen Schichten, so daß selbst bei fortgeschrittenem Alter einer Speicherzelle ein Abplatzen des Korrosionsschutzes nicht festzustellen ist. Der erfindungsgemäße Korrosionsschutz wird durch drei übereinander aufgetragene Schichten gebildet, wobei die erste auf die Innenfläche des Gehäuses aufgetragene Schutzschicht einen sehr großen Ausdehnungskoeffizienten aufweist. Sein Wert liegt zwischen $16 \cdot 10^{-6}$ bis $18 \cdot 10^{-6} \mathrm{grd}^{-1}$. Dieser Wert kommt sehr nahe an den Wert des Ausdehnungskoeffizienten heran, den das metallischen Gehäuses aufweist, das vorzugsweise aus Aluminium gefertigt ist. Diese Innenschicht wird durch eine Mangan-Eisen-Legierung gebildet, die mindestens 11 bis 19 Gew.% Mangan bezogen auf das Gesamtgewicht der Legierung enthält, wobei der Rest der Legierung aus Eisen besteht.

Unmittelbar auf diese Innenschicht ist eine Zwischenschicht aufgetragen. Auf diese Zwischenschicht folgt eine Deckschicht. Die Zwischenschicht hat die Aufgabe eine gute Haftung der Deckschicht auf der Innenschicht zu gewährleisten. Sie ist zudem so gewählt, daß durch ihren Ausdehnungskoeffizenten ein Ausgleich zwischen dem großen Ausdehnungskoeffizienten der Innenschicht und dem kleinen Ausdehnungskoeffizienten der Deckschicht erreicht wird. Die Zwischenschicht kann durch eine Legierung gebildet werden, die als wesentlichen Bestandteil Nickel aufweist, und deren restlicher Anteil durch Chrom gebildet wird. Die Zwischenschicht kann auch aus einer Legierung gefertigt werden, deren wesentlicher Bestandteil Kobalt ist. Diese Legierung enthält mindestens 50 Gew.% Kobalt und 20 bis 30 Gew.% Chrom bezogen auf das Gesamtgewicht der Legierung, wobei der restliche Anteil der Legierung aus Eisen besteht. Ferner ist es möglich, die Zwischenschicht aus Stellit 6B herzustellen. Es handelt sich hierbei um eine Legierung, die 26 Gew.% Chrom, 62 Gew.% Kobalt und 5 bis 13 Gew.% Wolfram bezogen auf das Gesamtgewicht der Legierung aufweist. Der Ausdehnungs koeffizient dieser Legierungen liegt bei $12 \cdot 10^{-6} \mathrm{grd}^{-1}$. Auf diese Zwischenschicht ist die aus reinem Molybdän oder Chrom gebildete Deckschicht aufgetragen. Ihr Ausdehnungskoeffizient weist einen Wert von $5 \times 10^{-6} \mathrm{grd}^{-1}$ auf.

Durch das Auftragen von drei Schichten übereinander auf die Innenflächen des Gehäuses 2 wird ein beständiger Korrosionsschutz mit niedrigem elektrischem Innenwiderstand für das Gehäuse gebildet. Dieser Korrosionsschutz ist nicht nur dann beständig, wenn die Speicherzelle ausschließlich bei einer Temperatur von 350 °C betrieben wird. Vielmehr wird durch die Ausbildung dieser drei Schichten mit unterschiedlichen Ausdehnungskoeffizienten ein Abplatzen des Korrosionsschutzes auch bei häufigem Temperaturwechsel vermieden. Die Speicherzelle bietet den Vorteil, daß ihr Gehäuse nicht negativ auf Abkühlungen unter 100 °C reagiert und auch eine Vielzahl von thermischen Zyklisierungen keinen negativen Einfluß auf die Beständigkeit des Gehäuses haben. Das gilt für die gesamte Lebensdauer der Speicherzelle.

Weitere erfindungswesentliche Merkmale sind in den Unteransprüchen gekennzeichnet.

Die Erfindung wird nachfolgend anhand einer Zeichnung erläutert.

Die einzige zur Beschreibung gehörende Figur zeigt eine elektrochemische Speicherzelle 1 im Längsschnitt. Die Speicherzelle 1 wird nach außenhin durch ein metallisches Gehäuse 2 begrenzt, das bei dem hier dargestellten Ausführungsbeispiel becherförmig ausgebildet ist. Es ist aus Leichtmetall, vorzugsweise aus Aluminium hergestellt. Im Inneren des Gehäuses 2 ist ein ebenfalls becherförmig ausgebildeter Festelektrolyt 3 angeordnet. Er ist aus Betaaluminiumoxid gefertigt. Sein Innenraum dient als Anodenraum 4, der mit Natrium gefüllt ist. Die Abmessungen des Festelektrolyten 3 sind so gewählt, daß zwischen seinen Außenflächen und den Innenflächen des metallischen Gehäuses 2 ein zusammenhängender Zwischenraum verbleibt, der als Kathodenraum 5 dient. Dieser enthält die Elektrode 6, die aus einem filz- bzw. faserförmigen Material auf der Basis von Graphit oder Kohlenstoff gefertigt und mit Schwefel getränkt ist. Erfindungsgemäß sind die Innenflächen des Gehäuses 2 von einem Korrosionsschutz 10 überzogen. Der Korrosionsschutz 10 wird durch drei übereinander aufgetragene Schichten 11, 12, 13 gebildet. Alle drei Schichten bilden für sich alleine schon einen dauerhaften Korrosionsschutz für das Gehäuse bzw. die darunter befindlichen Schichten. Die Dicke des gesamten Korrosionsschutzes 10 beträg 50 bis 100 μm. Es handelt sich dabei um eine Innenschicht 11, die unmittelbar auf die Innenflächen des Gehäuses 2 aufgetragen ist. Auf diese ist direkt eine Zwischenschicht 12 aufgebracht, auf welche eine Deckschicht 13 folgt, die unmittelbar an die Elektrode 6 angrenzt. Die Innenschicht 11 wird durch eine Legierung aus Mangan und Eisen gebildet. Der Anteil an Mangan beträgt 11 bis 19 Gew.% bezogen auf das Gesamtgewicht der aufgetragenen Legierung. Der restliche Anteil der Legierung besteht aus Eisen. Diese Innenschicht 11 weist einen Ausdehnungskoeffizienten auf, dessen Wert zwischen $16 \times 10^{-6}$ und $18 \times 10^{-6} \mathrm{grd}^{-1}$ liegt. Der Wert des Ausdehnungskoeffizienten, den die Innenschicht 11 aufweist, liegt damit im Wertebereich des Ausdehnungskoeffizienten, den das Gehäuse besitzt. Die Innenschicht 11 wird vorzugsweise in einer Dicke von 15 bis 35 μm auf die Innenflächen des Gehäuses 2 aufgetragen. Das Auftragen der Innenschicht 11 erfolgt vorzugsweise mittels Plasamspritzen. Auf diese Innenschicht 11 ist die Zwischenschicht 12 aufgetragen. Sie hat die Aufgabe, eine optimale Haftung der dritten Schicht 13 auf der Innenschicht 11 sicherzustellen. Gleichzeitig bildet sie einen Ausgleich zwischen dem großen Ausdehnungskoeffizienten der Innenschicht 11 und der als Deckschicht dienenden dritten Schicht 13. Die Zwischenschicht wird erfindungsgemäß durch eine Legierung auf der Basis von Nickel gebildet, wobei der Nickelanteil 80 Gew.% bezogen auf das Gesamtgewicht der Legierung beträgt, während der restliche Anteil von 20 Gew.% durch Chrom gebildet wird. Anstelle dieser Legierung kann zur Ausbildung der Zwischenschicht 12 auch eine Legierung auf der Basis von Kobalt verwendet werden. Eine solche Legierung weist 50 Gew.% Kobalt und 20 bis 30 Gew.% Chrom bezogen auf das Gesamtgewicht der Legierung auf. Der restliche Anteil der Legierung besteht aus Eisen. Eine weitere Möglichkeit zur Ausbildung der Zwischenschicht ist durch die Vewendung von Stillit 6B gegeben. Diese Legierung besteht aus 62 Gew.% Kobalt, 26 Gew.% Chrom und 5 bis 13 Gew.% Wolfram bezogen auf das Gesamtgewicht der Legierung. Alle hier beschriebenen Legierungen weisen die Eigenschaft auf, daß ihr Ausdeh-

nungskoeffizient etwa $12\times10^{-6}\,\mathrm{grd}^{-1}$ beträgt. Ferner sind sie in der Lage die Deckschicht 13, die als dritte Schicht des Korrosionsschutzes 10 vorgesehen ist und direkt an die Elektrode 6 angrenzt, dauerhaft mit der Innenschicht 11 zu verbinden. Die Zwischenschicht 12 wird in einer Dicke von 15 bis 35 μm aufgetragen. Das Auftragen der Schicht erfolgt mittels Plasmaspritzen. An das Auftragen der Zwischenschicht 12 schließt sich unmittelbar das Auftragen der Deckschicht 13 an. Die Deckschicht 13 besteht aus reinem Molybdän oder Chrom. Die Dicke dieser Schicht beträgt ebenfalls 15 bis 35 μm. Der Ausdehnungskoeffizient der Deckschicht 13 weist einen Wert von $5\times10^{-6}\,\mathrm{grd}^{-1}$ auf. Durch die Zwischenschicht 12 wird diese Deckschicht 13 als Einheit vollständig und dauerhaft mit der Innenschicht 11 bzw. über diese mit den Innenflächen des Gehäuses dauerhaft verbunden. Die Zwischenschicht 12 stellt außerdem einen gleitenden Übergang zwischen dem Ausdehnungskoeffizienten der Innenschicht 11 mit einem Wert zwischen $16\times10^{-6}$ und $18\times10^{-6}\,\mathrm{grd}^{-1}$ und dem Ausdehnungskoeffizienten der Deckschicht 13 mit einem Wert von $5\times10^{-6}\,\mathrm{grd}^{-1}$ dar.

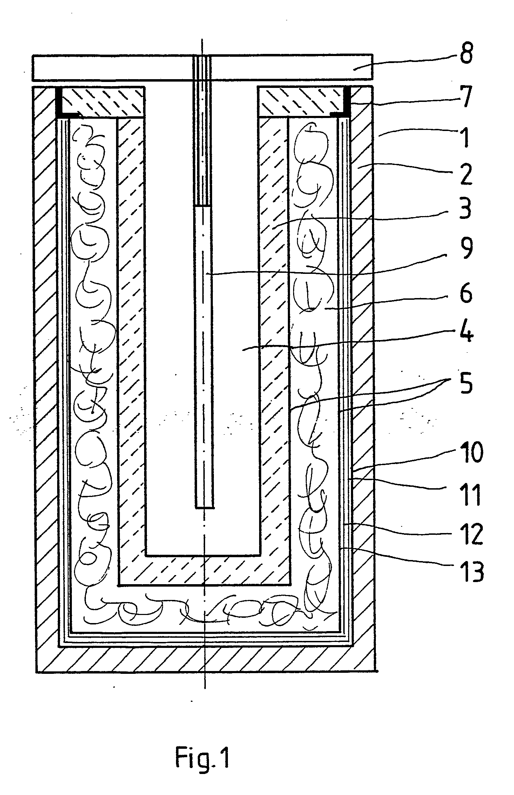

## Ansprüche

1. Elektrochemische Speicherzelle auf der Basis von Natrium und Schwefel mit einem Anodenraum (4) und einem Kathodenraum (5), die durch einen alkaliionenleitenden Festelektrolyten (3) voneinander getrennt und wenigstens bereichsweise von einem metallischen Gehäuse (2) begrenzt sind, das auf seinen Innenflächen mit einem Korrosionsschutz (10) versehen ist, dadurch gekennzeichnet, daß der Korrosionsschutz (10) durch mindestens zwei vorzugsweise mehrere auf die Innenflächen des Gehäuses (2) aufgetragene Schichten (11,12,13) mit unterschiedlichen Ausdehnungskoeffizienten gebildet ist, und daß die unmittelbar auf die Innenfläche des Gehäuses (2) aufgetragene Innenschicht (11) den größten und die mit der Elektrode (6) in Kontakt stehende Deckschicht (13) den kleinsten Ausdehnungskoeffizienten aufweist.

2. Elektrochemische Speicherzelle nach Anspruch 1, dadurch gekennzeichnet, daß die Innenschicht (11) durch eine Mangan-Eisen-Legierung gebildet ist, deren Ausdehnungskoeffizient 16 bis $18\times10^{-6}\,\mathrm{grd}^{-1}$ beträgt, und daß die Legierung 11 bis 19 Gew.% Mangan bezogen auf das Gesamtgewicht der Legierung enthält und der restliche Anteil der Legierung aus Eisen besteht.

3. Elektrochemische Speicherzelle nach einem der Ansprüche 1 oder 2, dadurch gekennzeichnet, daß die unmittelbar an die Elektrode (6) angrenzende Deckschicht (13) aus reinem Chrom oder Molybdän besteht und einen Ausdehnungskoeffizienten von $5\times10^{-6}\,\mathrm{grd}^{-1}$ aufweist.

4. Elektrochemische Speicherzelle nach einem der Ansprüche 1 bis 3, dadurch gekennzeichnet, daß zwischen der Innenschicht (11) und der Deckschicht (13) wenigstens eine Zwischenschicht (13) vorgesehen ist, deren Ausdehnungskoeffizient kleiner als der Ausdehnungskoeffizient der Innenschicht (6) und größer als der Ausdehnungskoeffizient der Deckschicht (13) ist.

5. Elektrochemische Speicherzelle nach Anspruch 4, dadurch gekennzeichnet, daß die Zwischenschicht aus einer Legierung auf der Basis von Nickel besteht, die 80 Gew.% Nickel und 20 Gew.% Chrom bezogen auf das Gesamtgewicht der Legierung aufweist.

6. Elektrochemische Speicherzelle nach Anspruch 4, dadurch gekennzeichnet, daß die Zwischenschicht (12) durch eine Legierung auf der Basis von Kobalt gebildet ist, die 50 Gew.% Kobalt und 20 bis 30 Gew.% Chrom bezogen auf das Gesamtgewicht der Legierung enthält und der restliche Anteil der Legierung aus Eisen besteht.

7. Elektrochemische Speicherzelle nach Anspruch 4, dadurch gekennzeichnet, daß die Zwischenschicht durch eine Legierung gebildet ist, die 62 Gew.% Kobalt, 26 Gew.% Chrom und 5 bis 13 Gew.% Wolfram bezogen auf das Gesamtgewicht der Legierung enthält.

8. Elektrochemische Speicherzelle nach einem der Ansprüche 1 bis 7, dadurch gekennzeichnet, daß der Ausdehungskoeffizient der Zwischenschicht (12) $12\times10^{-6}\,\mathrm{grd}^{-1}$ beträgt.

9. Elektrochemische Speicherzelle nach einem der Ansprüche 1 bis 8, dadurch gekennzeichnet, daß die Dicke des Korrosionsschutzes (10) 50 bis 100 μm beträgt, und Schichten (11,12,13) 15 bis 35 μm dick aufgetragen sind.

Fig.1

| | Europäisches Patentamt | EUROPÄISCHER RECHERCHENBERICHT | Nummer der Anmeldung |
|---|---|---|---|
| | | | EP 88 12 1184 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-2 371 782 (CHLORIDE SILENT POWER LTD) * Seite 3, Zeilen 9-18; Seite 5, Zeilen 22-32; Seite 6, Zeilen 15-26; Seite 8, Zeilen 34-39 * --- | 1 | H 01 M 4/66 H 01 M 10/39 |
| X | DE-A-2 720 726 (BROWN BOVERI) * Ansprüche; Seite 6, Absatz 2 - Seite 7, Absatz 4 * --- | 1 | |
| X | PATENT ABSTRACTS OF JAPAN, Band 11, Nr. 138 (E-503)[2585], 2. Mai 1987; & JP-A-61 279 072 (SUMITOMO ELECTRIC IND. LTD) 09-12-1986 * Insgesamt * --- | 1,4 | |
| X | FR-A-2 392 508 (CHLORIDE SILENT POWER LTD) * Seite 4, Zeile 1 - Seite 5, Zeile 23 * --- | 1,4 | |
| X | GB-A-1 595 192 (CHLORIDE SILENT POWER LTD) * Seite 1, Zeile 81 - Seite 3, Zeile 27; Ansprüche * --- | 1,3,4 | RECHERCHIERTE SACHGEBIETE (Int. Cl.4) H 01 M 4/66 H 01 M 10/39 |
| X | DE-A-3 334 669 (BROWN BOVERI & CIE.) * Seite 6, Zeile 13 - Seite 8, Zeile 16 * --- | 1,4 | |
| X | GB-A-2 017 389 (ELECTRIC POWER RESEARCH) * Seite 2, Zeile 8 - Seite 3, Zeile 46 * --- | 1,9 | |
| A | US-A-4 110 516 (M.W. BREITER) * Insgesamt * --- -/- | 1,3 | |

Der vorliegende Recherchenbericht wurde für alle Patentansprüche erstellt

| Recherchenort | Abschlußdatum der Recherche | Prüfer |
|---|---|---|
| DEN HAAG | 13-04-1989 | DE VOS L.A.R. |

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | WO-A-8 404 208 (FORD MOTOR CO.) <br> * Seite 7, Zeile 10 - Seite 9, Zeile 23 * <br> --- | 1 | |
| A | EP-A-0 031 197 (FORD-WERKE AG) <br> * Seite 3, Zeile 1 - Seite 4, Zeile 35; Seite 8, Zeile 11 - Seite 9, Zeile 1 * <br> --- | 1,4 | |
| D,A | THIN SOLID FILMS, Band 83, Nr. 4, September 1981, Seiten 417-428, Elsevier Sequoia, Lausanne, CH; K.R. KINSMAN et al.: "The use of coatings in high temperature battery systems" <br> * Seite 420: 3.2.1; Seite 423: 4.1 - Seite 425, letzter Absatz * <br> --- | 1,3,4 | |
| A | US-A-4 515 865 (DONG-SIL PARK et al.) <br> * Insgesamt * <br> ----- | 1,4 | |

RECHERCHIERTE
SACHGEBIETE (Int. Cl.4)

Der vorliegende Recherchenbericht wurde für alle Patentansprüche erstellt

| Recherchenort | Abschlußdatum der Recherche | Prüfer |
|---|---|---|
| DEN HAAG | 13-04-1989 | DE VOS L.A.R. |

EPO FORM 1503 03.82 (P0403)